# EUROPÄISCHE PATENTANMELDUNG

(11) **EP 2 447 616 A2**
(43) Veröffentlichungstag der Anmeldung: **02.05.2012**
(21) Anmeldenummer: 11186771.9
(22) Anmeldetag: 26.10.2011
(51) Int. Cl.: F24F 12/00

(54) **Dezentrale Raumlüftungsvorrichtung mit Wärmerückgewinnung**

(30) Priorität: 26.10.2010 DE 102010042950; 26.10.2010 DE 102010042948
(71) Anmelder: BluMartin GmbH, 82234 Wessling (DE)
(72) Erfinder: Martin, Bernhard, 82234 Wessling (DE); Schally, Thomas, 82541 Münsing (DE)
(74) Vertreter: Geyer, Fehners & Partner

(57) **Zusammenfassung**

Eine wärmerückgewinnende Lüftungsvorrichtung zum Einbau in eine thermische Gebäudehülle (1, 2), die einen Innenraum von einem Gebäudeäußeren trennt und die einen Temperaturgradienten zwischen Innenraum und Gebäudeäußerem bewirkt, weist einen rekuperativen Wärmetauscher (3), der Wärmeenergie eines Abluftstromes auf einen Zuluftstrom überträgt und der als Gegenstromwärmetauscher ausgebildet ist, durch den der Zuluftstrom und der Abluftstrom strömen und in dem sie sich längs eines Temperaturgradienten abkühlen bzw. erwärmen, wobei der Temperaturgradient des Wärmetauschers (3) im wesentlichen parallel zum Temperaturgradienten der Gebäudehülle (1, 2) verläuft, eine Abluftfördereinrichtung (6), welche den Abluftstrom vom Innenraum durch den Wärmetauscher (3) zum Gebäudeäußeren fördert, und eine Zuluftfördereinrichtung (7), welche den Zuluftstrom vom Gebäudeäußeren durch den Wärmetauscher (3) zum Innenraum fördert, auf, wobei die Abluftfördereinrichtung (6) oberhalb und die Zuluftfördereinrichtung (7) unterhalb des Wärmetauschers (3) angeordnet sind, wobei die Lüftungsvorrichtung bezüglich des Wärmetauschers (3) und der Abluft- und Zuluftfördereinrichtung (6, 7) in einem Vertikalschnitt die Konfiguration eines liegenden T hat, dessen Fuß senkrecht zur Gebäudehülle verläuft und durch den Wärmetauscher (3) gebildet ist, wobei die oberhalb und unterhalb des Wärmetauschers (3) liegenden Luftfördereinrichtungen (6, 7) den Querstrich des T bilden.

## Beschreibung

Die Erfindung bezieht sich auf eine wärmerückgewinnende Lüftungsvorrichtung zum Einbau in eine thermische Gebäudehülle, die einen Innenraum von einem Gebäudeäußeren trennt und die einen Temperaturgradienten zwischen Innenraum und Gebäudeäußerem bewirkt, wobei die Lüftungsvorrichtung aufweist: einen rekuperativen Wärmetauscher, der Wärmeenergie eines Abluftstromes auf einen Zuluftstrom überträgt, und der als Gegenstromwärmetauscher ausgebildet ist, durch den der Zuluftstrom und der Abluftstrom strömen und in dem sie sich längs eines Temperaturgradienten abkühlen bzw. erwärmen, wobei der Temperaturgradient des Wärmetauschers parallel zum Temperaturgradienten der Gebäudehülle verläuft, eine Abluftfördereinrichtung, welche den Abluftstrom vom Innenraum durch den Wärmetauscher zum Gebäudeäußeren fördert, und eine Zuluftfördereinrichtung, welche den Zuluftstrom vom Gebäudeäußeren durch den Wärmetauscher zum Innenraum fördert.

Durch bessere Gebäudeisolierung und effizientere Heizanlagen gelingt es, den Energiebedarf für die Gebäudeheizung mehr und mehr zu senken. Aus verschiedenen Gründen ist jedoch ein Mindestluftaustausch zwischen Gebäudeinnerem und Gebäudeäußerem durch die thermische Gebäudehöhle zwingend erforderlich. Die Wärmeverluste bei solcher Lüftung werden deshalb mehr und mehr zu einer besonders störenden Größe. Man setzt deshalb Lüftungsvorrichtungen der eingangs genannten Art ein, um lüftungsbedingte Wärmeverluste zu reduzieren. Aus Effizienzgründen sind dabei rekuperative Lüftungsvorrichtungen zu bevorzugen, welche die sensible Wärme des Innenraums im Winter rückgewinnen bzw. es im Sommer erlauben, den Innenraum zu kühlen. Für die Belüftung von Gebäuden sind zur reinen Rückgewinnung sowohl zentrale wie auch dezentrale Vorrichtungen bekannt. Für Passivhäuser werden derzeit zentrale Anlagen eingesetzt. Sie versprechen beste Wirkungsgrade und behandeln mit großvolumigen Wärmetauschern den Luftbedarf für ein gesamtes Gebäude zentral hinsichtlich Energierückgewinnung. Die Verwendung zentraler Anlagen ist jedoch insofern nachteilig, als eine sehr aufwendige Luftverteilung im Gebäude vorgenommen werden muß. Bei der Konstruktion muß ein Passivhaus quasi um die Lüftungsanlage herum geplant werden und es entsteht ein beträchtlicher zusätzlicher Raumbedarf. Die Wartung und die Einhaltung von Hygienevorschriften der Zuluftleitungen ist problematisch. Dies dürfte ein Grund für die nur zögerliche Verbreitung dieser extrem energiesparenden Gebäudebauweise sein. Auch sind die Kosten für das eigentliche Lüftungsgerät nur ein kleiner Teil der Gesamtkosten für das Lüftungssystem. Zwei Drittel der Kosten entfallen für die Aufwendungen für die Luftverteilung. Zudem ist eine Nachrüstung an bestehenden Gebäuden nicht praktikabel.

Es besteht deshalb Bedarf für dezentrale Anlagen. Dezentral arbeitende, sogenannte Komfort-Lüftungsgeräte erfreuen sich größerer Beliebtheit. Sie können ohne Hinzunahme eines Lüftungsplaners, beispielsweise von einem Elektriker installiert werden. Allerdings stehen hier der Lärmschutz und die Entfeuchtung moderner, mit geringen gebäudeseitigen Luftwechselzahlen arbeitender Gebäudekonzepte im Vordergrund. Aufgrund des schlechten Wirkungsgrades und unkonventioneller Luftwechselzahlen wird eine Energieeinsparung bei diesen Geräten jedoch höchstens in sehr geringem Maße erreicht. Weiter stellt sich das Problem, daß solche Geräte in aller Regel vom Innenraum aus sichtbar sind, was das Erfordernis mit sich bringt, daß sie möglichst bündig in die thermische Gebäudehülle eines Bauwerks eingegliedert werden können, also insbesondere zum Innenraum hin keine störenden Vorsprünge etc. aufweisen. Dieses Erfordernis ist ganz wesentlich für die Akzeptanz solcher Lüftungsvorrichtungen bei den Verbrauchern.

Man hat deshalb im Stand der Technik diesem Erfordernis Rechnung tragend verschiedenste Konzepte entwickelt, die es erlauben, eine Lüftungsvorrichtung mit Wärmerückgewinnung in eine thermische Gebäudehülle, d. h. in eine übliche Außenwand eines Gebäudes zu integrieren. Verschiedenste Ansätze hierfür zeigt die EP 1837610 A2. Eine gattungsgemäße Lüftungsvorrichtung der eingangs genannten Art ist in der DE 102006001724 A1 offenbart. Dort wird ein hinsichtlich des Wirkungsgrades vorteilhafter Gegenstromwärmetauscher verwendet. Die Vorrichtung ist jedoch so gestaltet, daß sie an der Gebäudeinnenwand erheblich vorsteht. Um eine optisch möglichst nicht sichtbare Integration in die Außenwand zu erreichen, wurden hingegen Ansätze verfolgt, die einen schlechten Wirkungsgrad bei der Wärmerückgewinnung zeigen.

Es finden sich im Stand der Technik also gegenwärtig zwei gegensätzliche Konzepte: Entweder wird die Lüftungsanlage hinsichtlich ihres Wirkungsgrades optimal gestaltet und steht dann an der Gebäudeinnenwand vor, oder es werden beim Wirkungsgrad Abstriche gemacht, beispielsweise indem Kreuzwärmetauscher oder Rotationswärmetauscher eingesetzt werden, um die Anlage nicht störend sichtbar in die Außenwand einsetzen zu können.

Der Erfindung liegt die Aufgabe zugrunde, eine gattungsgemäße, dezentrale Lüftungsvorrichtung so weiterzubilden, daß keine Elemente der Vorrichtung störend im Innenraum angeordnet werden müssen.

Diese Aufgabe wird erfindungsgemäß gelöst durch eine wärmerückgewinnende Lüftungsvorrichtung zum Einbau in eine thermische Gebäudehülle, die einen Innenraum von einem Gebäudeäußeren trennt und die einen Temperaturgradienten zwischen Innenraum und Gebäudeäußerem bewirkt, wobei die Lüftungsvorrichtung aufweist: einen rekuperativen Wärmetauscher, der Wärmeenergie eines Abluftstromes auf einen Zuluftstrom überträgt und der als Gegenstromwärmetauscher ausgebildet ist, durch den der Zuluftstrom und der Abluftstrom strömen und in dem sie sich längs eines Temperaturgradienten abkühlen bzw. erwärmen, wobei der Temperaturgradient des Wärmetauschers im wesentlichen parallel zum Temperaturgradienten der Gebäudehülle verläuft, eine Abluftfördereinrichtung, welche den Abluftstrom vom Innenraum durch den Wärmetauscher zum Gebäudeäußeren fördert, und eine Zuluftfördereinrichtung, welche den Zuluftstrom vom Gebäudeäußeren durch den Wärmetauscher zum Innenraum fördert, wobei die Abluftfördereinrichtung oberhalb und die Zuluftfördereinrichtung unterhalb des Wärmetauschers angeordnet sind, wobei die Lüftungsvorrichtung bezüglich des Wärmetauschers und der Abluft- und Zuluftfördereinrichtungen in einem Vertikalschnitt die Konfiguration eines liegenden T hat, dessen Fuß senkrecht zur Gebäudehülle verläuft und durch den Wärmetauscher gebildet ist, wobei die oberhalb und unterhalb des Wärmetauschers liegenden Luftfördereinrichtungen den Querstrich des T bilden.

Es wird ein Gegenstromwärmetauscher eingesetzt, der die Energierückgewinnung zwischen Abluftstrom und Zuluftstrom bewirkt. Gegenstromwärmetauscher sind, anders als z. B. Kreuzwärmetauscher, für ihren guten Wirkungsgrad bekannt. Werte über 90 % sind möglich. Nachteilig an Gegenstromwärmetauschern ist jedoch die vergleichsweise große Baulänge. Um einen Gegenstromwärmetauscher bei üblicher Dicke einer thermischen Gebäudehülle, d. h. bei üblicher Außenwanddicke, einzusetzen, wird dieser so angeordnet, daß der Temperaturgradient des Wärmeübergangs parallel zum Temperaturgradienten der Gebäudehülle verläuft. Das steigert den Wirkungsgrad und vermeidet zugleich Kältebrücken. Zuluft- und Abluftstrom fließen durch den Wärmetauscher also im wesentlichen senkrecht zur Gebäudehülle, d. h. senkrecht zur Außenwand.

Um auch geringe Wanddicken nicht zu überschreiten, was dazu führen würde, daß die Lüftungsvorrichtung entweder am Gebäudeäußeren oder am Innenraum unerwünscht vorstehen würde, sind die Zuluft- und Abluftfördereinrichtungen nicht wie üblich in Reihe mit dem Wärmetauscher, sondern oberhalb bzw. unterhalb des Wärmetauschers angeordnet. Die Lüftungsvorrichtung hat dann bezüglich des Wärmetauschers und der Fördereinrichtungen die Konfiguration eines liegenden T, wobei der Fuß des T senkrecht zur Gebäudehülle verläuft und durch den Gegenstromwärmetauscher gebildet ist. Die oberhalb und unterhalb des Gegenstromwärmetauschers liegenden Luftfördereinrichtungen, üblicherweise Gebläse, bilden in dieser Betrachtungsweise den Querstrich des T.

Einen besonders kompakten Aufbau erreicht man, wenn die Luftfördereinrichtungen gegenüber dem inneren Ende des Wärmetauschers so in Richtung des Gebäudeäußeren zurückgesetzt sind, daß sie senkrecht zum Temperaturgradienten gesehen, die Ein- bzw. Austrittsfläche am Wärmetauscher nur höchstens teilweise überdecken.

Die gewählte Anordnung kombiniert einen hohen Wirkungsgrad der Wärmerückgewinnung mit einer Baugröße, die in übliche Außenwände integriert werden kann. Zugleich ist vorteilhafterweise durch die oberhalb bzw. unterhalb des Gegenstromwärmetauschers liegenden Luftfördereinrichtungen nur etwa eine (bezogen auf die Richtung des Temperaturgradienten) rechtwinklige Umlenkung des jeweiligen Luftstroms zwischen der Fördereinrichtung und dem Wärmetauscher erforderlich. Dies ist für einen geräuscharmen und Energie sparenden Betrieb günstig.

Weiter erreicht die T-Anordnung, daß für die Luftfördereinrichtungen keine störenden Bauraumbeschränkungen bestehen. Es können somit vorteilhafterweise effiziente und leise arbeitende Radialgebläse eingesetzt werden.

Die Lüftungsvorrichtung erfordert darüber hinaus bauseitig nur einen geringen Aufwand. Es genügt, wenn in der thermischen Gebäudehülle, für welche nachfolgend exemplarisch der Begriff "Außenwand" verwendet wird, eine senkrechte Auskofferung vorgesehen wird, die z. B. für den Querstrich des T, also für den Bauraum der Luftfördereinrichtungen Platz bietet. Ein in der Auskofferung vorgesehener Durchbruch für den "Fuß" des T, d. h. für den Querschnitt des Wärmelufttauschers, stellt dann die Verbindung zur Außenwand her. Eine solche Auskofferung mit einem Durchbruch kann bauseitig einfach bereitgestellt werden.

Je nach klimatischen Bedingungen ist ein Einfrieren des Wärmetauschers zu befürchten. Der Stand der Technik sieht dafür aufwendige Konstruktionen, beispielsweise in Form eines Thermosiphons, oder eine elektrische Frischluftbeheizung vor. Die Erfindung ermöglicht nun eine einfachere Ausgestaltung in dieser Hinsicht, daß nämlich ein verschließbarer Überströmkanal vorgesehen ist, durch den in dessen geöffneter Stellung der Zuluftstrom den Wärmetauscher außen umströmt. Dann ist auf einfache Art und Weise vermieden, daß sich die im Wärmetauscher abkühlende Abluft unter ihren Gefrierpunkt abkühlt und durch Eisbildung den Wärmetauscher zusetzt. Besonders vorteilhaft ist es, wenn der Überströmkanal von einer Oberseite des Wärmetauschers zu einer Unterseite des Wärmetauschers verläuft, was eine mehrseitige Umströmung realisiert. Dies vermeidet einen langen Luftkanal.

Die erfindungsgemäße Lüftungsvorrichtung kann auf einfache Art und Weise und sehr vorteilhaft mit einer Heizeinrichtung kombiniert werden, die unter der Lüftungsvorrichtung und insbesondere unterhalb der Zuluftfördereinrichtung angeordnet ist. Eine solche Heizeinrichtung kann beispielsweise in der erwähnten Auskofferung an passender Stelle unterhalb des Mauerdurchbruchs vorgesehen werden und an eine Zentralheizung des Gebäudes angeschlossen sein. Die Lüftungsvorrichtung weist dann unterhalb der Zuluftfördereinrichtung einen Auslaß auf, durch den der Zuluftstrom, nachdem er durch den Wärmetauscher geführt wurde oder durch den Überstromkanal den Wärmetauscher überströmte, zur Heizeinrichtung abgegeben wird. Optional ist auch ein Einlaß zur Aufnahme der durch die Heizeinrichtung erwärmten Zuluft vorgesehen. Mittels eines verstellbaren Ventils kann an der Lüftungsvorrichtung eingestellt werden, welcher Anteil des Zuluftstromes durch die Heizeinrichtung geführt und damit erwärmt wird. Wesentlich hierbei ist, daß ein einstellbarer Anteil der Zuluft in die Heizeinrichtung abgegeben wird. Ob die erwärmte Luft wieder in der Lüftungsvorrichtung aufgenommen wird oder von der Heizeinrichtung direkt in den Innenraum abgegeben wird, ist für die wesentliche Funktion, nämlich einen beliebig einstellbaren Anteil der Zuluft zu beheizen, ohne weiteren Belang.

Von Bedeutung für die Akzeptanz einer Lüftungsvorrichtung ist es, daß diese bauseitig mit geringem Aufwand, also kostengünstig installiert werden kann. Die oben erwähnte Möglichkeit, lediglich eine Auskofferung und einen Wanddurchbruch vorzusehen, ist diesem Zweck äußerst dienlich. Weiter vorteilhaft ist es, wenn die Lüftungsvorrichtung ein Gehäuse aufweist, in das der Wärmetauscher, die Abluftfördereinrichtung und die Zuluftfördereinrichtung eingebaut sind, und weiter ein Mauerkasten vorgesehen ist, der zum Einbau in die Außenwand vorgesehen ist. Das Gehäuse und der Mauerkasten sind so aufeinander abgestimmt, daß das Gehäuse in den Mauerkasten dichtend einschiebbar ist. Zwischen Gehäuse und Mauerkasten sind zueinander passende Fluid- bzw. Elektrokupplungen vorgesehen, die beim Einschieben des Gehäuses in den Mauerkasten die entsprechenden Verbindungen, welche für den Betrieb der Lüftungsvorrichtung nötig sind, schließen.

Dieses Konzept hat den Vorteil, daß bauseitig der Mauerkasten vorbereitet und eingebaut wird. Zugleich wird der an die entsprechenden Elektro- und Fluidverbindungen angeschlossen. Im einfachsten Fall bedeutet dies ein Anschluß des Mauerkastens an das Stromnetz. Diese Arbeiten erfordern keine weiteren lüftungstechnischen Fachkenntnisse. Der Lüftungstechniker oder Elektriker kann dann das Gehäuse der Lüftungsvorrichtung einfach in den Mauerkasten einschieben. Die entsprechenden elektrischen und, soweit vorgesehen, fluidischen Verbindungen werden automatisch geschlossen. Vorzugsweise sind dabei die Dichtungen so ausgebildet, daß keine in der Ebene der Einschubrichtung liegenden Dichtungen geschlossen werden müssen. Besonders einfach ist dies dadurch zu erreichen, daß mindestens eine Schrägfläche vorgesehen wird, die schräg oder senkrecht zur Einschubrichtung liegt und in der die Fluid- bzw. Elektrokupplungen liegen. Der Lüftungstechniker muß dann das Gehäuse lediglich in den Mauerkasten einschieben, um die Installation des Gerätes abzuschließen. Man erreicht eine "plug and blow"-Eigenschaft der Lüftungsvorrichtung.

Das Konzept eines in einen Mauerkasten einschiebbaren Gehäuses hat weiter den Vorteil, daß ein eventuell nötig werdender Wechsel von in der Lüftungsvorrichtung vorgesehenen Luftfiltern sehr einfach möglich ist. Man muß dazu lediglich das Gehäuse aus dem Mauerkasten ziehen und hat dann einen beispielsweise in der Einströmöffnung für die Frischluft liegenden Filter bequem zugänglich. Gleiches gilt natürlich auch für andere Wartungs- und Reparaturarbeiten.

Die Lüftungsvorrichtung soll natürlich für einen möglichst großen Bereich von Außenwanddicken ohne große Anpassungsarbeiten einsetzbar sein. Hierfür ist es bevorzugt, den Mauerkasten ebenfalls T-förmig auszubilden, wobei für den Fuß des T ein teleskopierbarer, zweiteiliger Aufbau vorgesehen ist, der es erlaubt, den zum Durchbruch hin laufenden Teil des Mauerkastens an die Restwanddicke im Bereich des Durchbruches anzupassen.

Um Kondensat abzuleiten, ist es zu bevorzugen, den Wärmetauscher leicht verkippt gegenüber der Horizontalen vorzusehen. Bevorzugterweise ist dies bereits durch einen entsprechenden Einbau im Gehäuse verwirklicht. Für das Kondensat kann im Mauerkasten eine Ablaufschräge vorgesehen werden, die vorzugsweise zugleich auch als Anschlag ausgebildet ist, der das Einschieben des Gehäuses in den Mauerkasten begrenzt. Bei der erwähnten Ausführungsform mit zweiteiligem Mauerkasten kann die Ablaufschräge im teleskopierbar aufschiebbaren Teil vorgesehen werden.

Bei einem zweiteiligen Aufbau des Mauerkastens ist es bevorzugt, wenn der Fuß des T-förmigen Mauerkastens einen Abschnitt hat, der unter einem leichten Schrägwinkel zur Horizontalen verläuft. Das vorzugsweise weiter vorgesehene teleskopierbar aufschiebbare Teil wird dann auf diesen leicht abfallend verlaufenden Abschnitt aufgeschoben. Diese Bauweise hat den Vorteil, daß der Ablauf von Kondenswasser gewährleistet ist, ohne daß gebäudeseitig eine Schräge vorbereitet werden muß.

Wie bereits erwähnt, ist es eine wesentliche Anforderung für Lüftungsvorrichtungen, daß sie vom belüfteten Innenraum aus nicht störend wahrnehmbar sind. Es ist deshalb bevorzugterweise eine zum Innenraum hin liegende Verkleidungsplatte vorgesehen, deren Oberfläche frei strukturiert werden kann und für die Wirkung der Lüftungsvorrichtung unbeachtlich ist. Im Sinne einer kompakten Bauweise ist es weiter zweckmäßig, eine Ausströmdüse zur Abgabe des Zuluftstromes in den Innenraum zumindest teilweise von einem Rand der Verkleidungsplatte zu begrenzen. Die Ausströmdüse kann dabei beispielsweise als sogenannte Weitwurfdüse ausgebildet werden, welche den Zuluftstrom weit in den Innenraum abgibt. Die Ausströmdüse kann auch durch die Verkleidungsplatte treten, die dann mehrteilig sein kann.

Grundsätzlich ist es möglich, die Lüftungsvorrichtung für normale Betriebszustände fest einzustellen oder eine manuelle Verstellmöglichkeit vorzusehen. Einen besonders komfortablen Betrieb erreicht man jedoch, wenn sowohl der Überstromkanal als auch die Abgabe der Zuluft an die Heizeinrichtung mittels verstellbarer und ansteuerbarer Ventile automatisch eingestellt wird. Unter dem Begriff Ventil wird dabei jede Einrichtung verstanden, die den Durchtritt eines Luftstromes steuert, beispielsweise also eine Klappe o. ä. Sieht man dann ein in die Lüftungsvorrichtung integriertes Steuergerät vor, das die Ventile sowie auch die Luftfördereinrichtungen ansteuert, ist ein vollautomatischer und hochkomfortabler Betrieb der Lüftungsvorrichtung gegeben.

Grundsätzlich gibt die Lüftungsvorrichtung der beschriebenen Art vorzugsweise die angewärmte oder zusätzlich erhitzte Zuluft in den Innenraum ab. Hinsichtlich der Abluft ist es möglich, auch die Luft aus Nebenräumen abzuziehen, beispielsweise aus Naß- und/oder Küchenräumen. Für eine derartige Weiterbildung ist es bevorzugt, daß in Stromrichtung des Abluftstromes der Abluftfördereinrichtung mindestens zwei ansteuerbare Ventile vorgeordnet sind, von denen eines mit einem Luftanschluß für einen Nebenraum verbunden ist und das andere zum Innenraum führt. Auf diese Weise kann das Steuergerät in der Betriebssteuerung einen variablen Abzug des Abluftstromes aus dem Innenraum und dem Nebenraum einstellen.

Ein besonders komfortabler Betrieb der Lüftungsvorrichtung ist erreicht, wenn im Zu- und/oder Abluftstrom mindestens ein Sensor angeordnet ist, der die relative Feuchte, die Temperatur und/oder den CO₂-Gehalt der Luft ermittelt, bevor dieser in den Wärmetauscher eintritt. Das Steuergerät kann dann anhand dieser Meßwerte eine entsprechende Betriebssteuerung bewirken. Analoges gilt hinsichtlich eines Temperatursensors am Ausgang des Wärmetauschers, also zum Erfassen der sogenannten Fortluft. Mit einem solchen Sensor kann dann die Einstellung des durch den Überstromkanal fließenden Zuluftanteiles eingestellt werden, so daß ein Einfrieren des Wärmetauschers zuverlässig vermieden ist.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind. Auch solche Kombinationen oder in Alleinstellungen sind im Rahmen der vorliegenden Erfindung möglich.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schnittdarstellung durch eine Lüftungsvorrichtung einer ersten Ausführungsform,
- Fig. 2: eine perspektivische Ansicht der Lüftungsvorrichtung der Fig. 1, gesehen von einer Innenwand her,
- Fig. 3: eine Schnittdarstellung der Ansicht der Fig. 2,
- Fig. 4: eine perspektivische Ansicht der Lüftungsvorrichtung der Fig. 1 von einer Außenwand her gesehen,
- Fig. 5: eine Schnittdarstellung der Ansicht der Fig. 4,
- Fig. 6: eine Schemadarstellung einer Außenwand, in die Lüftungsvorrichtung eingebaut wird,
- Fig. 7: eine Schnittdarstellung durch ein Gehäuse der Lüftungsvorrichtung,
- Fig. 8: eine schematische Draufsicht auf einen Teil des Gehäuses der Fig. 7 und
- Fig. 9: eine Schnittdarstellung einer zweiten Ausführungsform einer Lüftungsvorrichtung,
- Fig. 10: eine perspektivische Darstellung der Lüftungsvorrichtung der Fig. 9,
- Fig. 11: eine Schnittdarstellung der Ansicht der Fig. 10 und
- Fig. 12: eine Ausschnittsvergrößerung der Fig. 9.

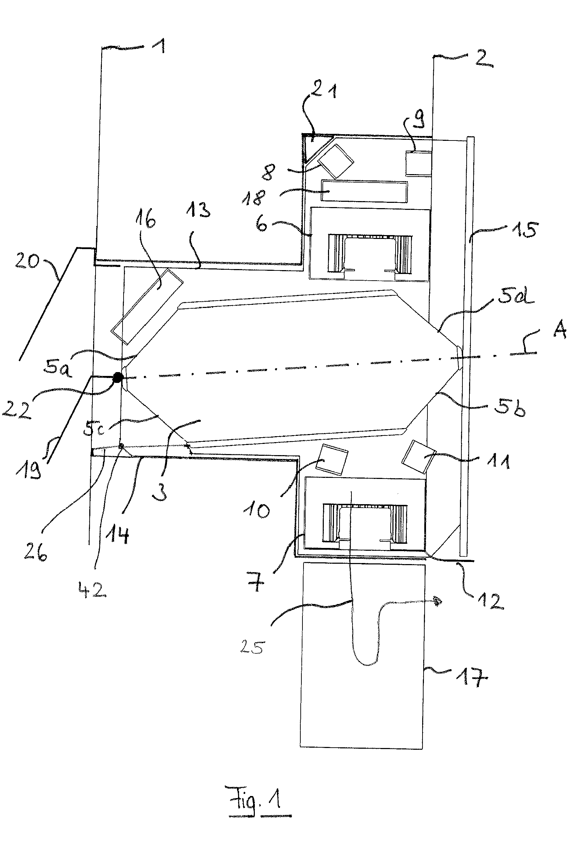

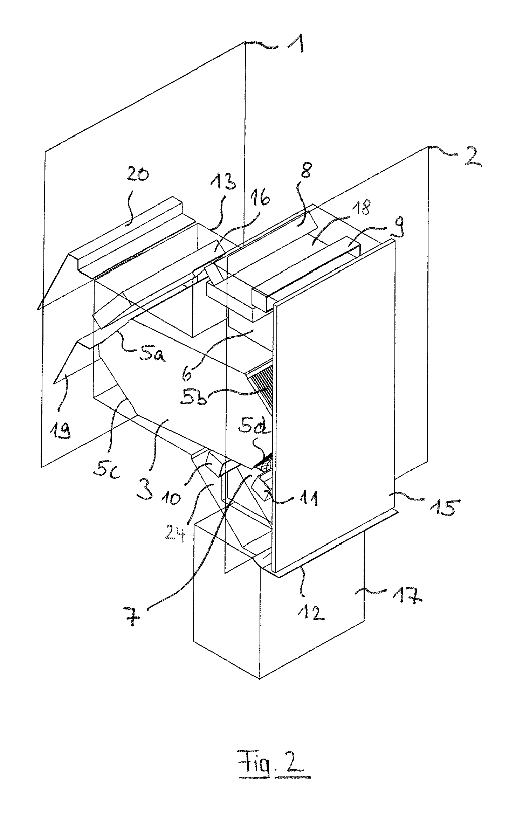

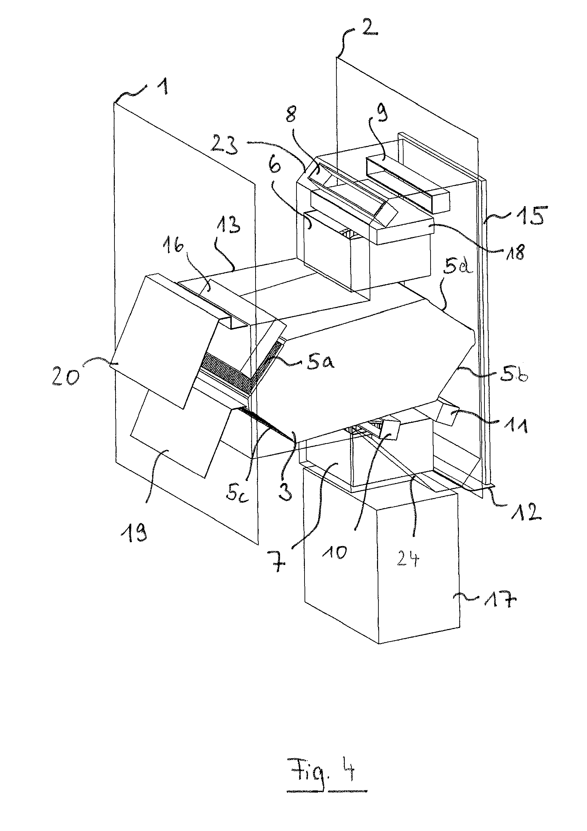

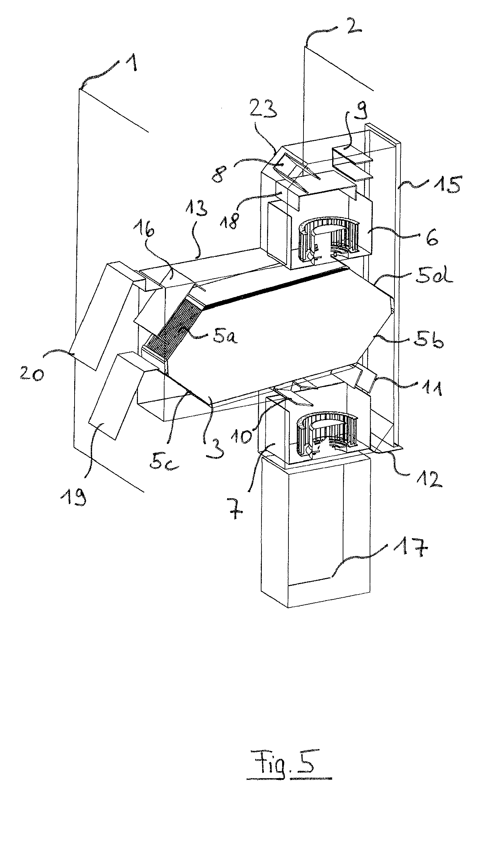

Figur 1 zeigt in einer Schnittdarstellung einer ersten Ausführungsform eine Lüftungsvorrichtung, die zum Einbau in eine thermische Gebäudehülle, üblicherweise einer Außenmauer, vorgesehen ist. Die Figuren 2 bis 5 zeigen in unterschiedlichen Ansichten dieselbe Lüftungsvorrichtung, und in allen Figuren sind einander entsprechende Elemente mit denselben Bezugszeichen versehen.

Von der Außenwand sind deren Außenwandfläche 1 und Innenwandfläche 2 schematisch in den Figuren 1 bis 5 eingetragen. Wesentlicher Bestandteil der dezentralen Lüftungsvorrichtung ist ein Wärmetauscher 3, der einen Wärmeübergang zwischen einer aus einem Innenraum abgezogenen Abluft und einer Zuluft bewirkt. Der Wärmetauscher 3 ist dabei als Gegenstromwärmetauscher ausgebildet, der die Luftströme im wesentlichen längs einer Achse A führt. Er hat dabei einen längs der Achse A verlaufenden Temperaturgradienten für die Zuluft und die Abluft. Damit Kondensat abgeleitet werden kann, das beim Abkühlen der Abluft anfällt, ist der Wärmetauscher 3 leicht zur Außenwandfläche 1 hin abfallend eingebaut.

Der Temperaturgradient für den Abluft- bzw. den Zuluftstrom im Wärmetauscher 3 verläuft parallel zum Temperaturgradienten zwischen der Innenwandfläche 2 und der Außenwandfläche 1. Dies ist dadurch erreicht, daß der Wärmetauscher 3 quasi "in die Wand hinein" liegend, also horizontal verbaut ist. Für den Begriff der Parallelität der Temperaturgradienten ist die Verkippung der Achse A gegenüber der Horizontalen vernachlässigbar. Diese Verkippung (kleiner 10°, bevorzugt kleiner 5° bzw. kleiner gleich 3°) gewährleistet, wie noch erläutert werden wird, daß Kondensat aus dem Wärmetauscher 3 zur Außenwandfläche 1 ablaufen kann. Dazu tritt natürlich die Fortluft an der unteren äußeren Luftdurchtrittsfläche des Wärmetauschers 3 aus, die deshalb eine Austrittsfläche ist.

Um dennoch für die Lüftungsvorrichtung eine Bautiefe zu erreichen, die im wesentlichen der Außenwanddicke entspricht, sind ein als Abluftfördereinrichtung wirkendes Abluftgebläse 6 und ein als Zuluftfördereinrichtung dienendes Zuluftgebläse 7 über bzw. unter dem Wärmetauscher 3 angeordnet. Somit ergibt sich insgesamt ein T-förmiger Gesamtaufbau, wobei der Fuß des T durch die Achse A gebildet ist und in die Wand hineinragt. Natürlich kann der Aufbau auch um 90° gedreht werden, so daß der Querbalken des T horizontal liegt.

Beim Betrieb einer wärmerückgewinnenden Lüftungsanlagen sind vier Luftströme zu unterscheiden. Sie sind in ihrer Bezeichnung auf den Innenraum bezogen. Die Abluft wird aus dem Innenraum abgezogen und tritt an der Lüftungsvorrichtung, nach Wärmerückgewinnung, als Fortluft aus. In den Innenraum gibt die Lüftungsvorrichtung die Zuluft ab, welche als Frischluft vom Gebäudeäuβeren angesaugt wird.

Der Gegenstromwärmetauscher hat prismenförmige Begrenzungsflächen, d. h. die Luftdurchtrittsflächen sind schräg zur Achse A hin gekippt. An einer Eintrittsfläche 5a tritt die Frischluft ein. Nach der Erwärmung im Wärmetauscher 3 tritt sie als Zuluftstrom an einer Austrittsfläche 5b aus. Dafür ist es natürlich zwingend erforderlich, daß das Zuluftgebläse 7 einen entsprechenden Unterdruck an der Austrittsfläche 5b erzeugt, um im Endeffekt Frischluft an der Eintrittsfläche 5a anzusaugen. Das Zuluftgebläse 7 gibt die Zuluft dann in den Innenraum ab. Hierfür kann z. B. eine Weitwurfdüse 12 oder ein parallel zur Innenwandfläche 2 ausblasender Auslaß vorgesehen sein. Dieser kann z. B. hinter einer Verkleidungsplatte 15 liegen. Das Zuluftgebläse 7 liegt nicht nur oberhalb des Körpers des Wärmetauschers 3, sondern ist auch gegenüber dem inneren Ende des Wärmetauschers nach außen zurückgesetzt, wie Fig. 1 zeigt. Auch überdeckt es die Austrittsfläche 5b nur teilweise. Dadurch wird der Zuluftstrom nach oben umgelenkt - bezogen auf die Achse A also um etwa 90°. Analoges gilt für das Abluftgebläse 6 und den Abluftstrom.

Im Wärmetauscher 3 wird die Frischluft erwärmt durch Wärme, die der Abluft entnommen wird. Die Abluft wird vom Abluftgebläse 6 in eine entsprechende Eintrittsfläche 5d des Wärmetauschers 3 geführt und tritt als Fortluft an der Austrittsfläche 5c aus. Sie hat sich auf ihrem Weg durch den Wärmetauscher 3 abgekühlt und ihre Wärme an den Zuluftstrom abgegeben, der an der Eintrittsöffnung 5a als Frischluft zugeführt wurde.

Zur Filterung der zugeführten Frischluft ist ein Luftfilter 16 der Eintrittsfläche 5a vorgeschaltet. Analog befindet sich ein Luftfilter 18 vor dem Abluftgebläse 6. Die beiden Luftfilter 16 und 18 schützen den Wärmetauscher und die Gebläse vor Verschmutzung. Darüber hinaus bietet der Luftfilter Staub- und Pollenschutz für den Innenraum.

Die Abkühlung der Abluft erfolgt oft unter den Taupunkt, den die Abluft beim Eintritt in den Wärmetauscher 3 hat. Dadurch entsteht das bereits erwähnte Kondensat, das durch die leichte Schrägstellung (3°-10°) der Achse A des Wärmetauschers 3 an der Unterkante der Austrittsfläche 5c aus dem Wärmetauscher 3 herausläuft. Mittels einer noch zu erläuternden Ablaufschräge 26 wird es aus der Lüftungsvorrichtung und über die Außenwandfläche hinaus ausgeleitet (vgl. Figur 1).

Die beschriebene Lüftungsvorrichtung kann nicht nur die Luft aus dem Innenraum, d. h. von rechts der Innenwandfläche 2 in Figur 1 gesehen, ansaugen, sondern auch aus mindestens einem Nebenraum, beispielsweise einem Naßraum oder einem Küchenraum. Dazu sind Ventile 8 und 9 vorgesehen, die den Strömungsquerschnitt für die Abluft freigeben können. Das Ventil 9 steuert die Abluft aus dem Innenraum, das Ventil 8 die Zuluft aus einem Nebenraum. Ist das jeweilige Ventil offen, wird Innenluft aus dem Innenraum bzw. dem Nebenraum abgesaugt.

In der Führung des Zuluftstromes ist ein Ventil 10 vorgesehen, das dazu dient, eine Überströmung des Wärmetauschers 3 zu erreichen. Diese ist möglich, da am Gehäuse 13 ein Spalt freigelassen ist, durch den Zuluft unter Umgehung des Wärmetauschers 3 zum Ventil 10 strömen kann, wenn dieses geöffnet ist. Die angesaugte Frischluft strömt also nicht in die Eintrittsfläche 5a und durch den Wärmetauscher 3, sondern außen am Wärmetauscher 3 vorbei, wenn das Ventil 10 geöffnet ist. Anschließend gelangt sie dann als Zuluft beispielsweise über die Weitwurfdüse 12 in den Innenraum. Dieser Betrieb erlaubt es, ein Vereisen des Gegenstromwärmetauschers wirksam zu vermeiden, da die Abluft weiterhin durch den Wärmetauscher 3 geführt wird und diesen auch in Abschnitten, die zur Außenwandfläche 1 hin gelegen sind, erwärmt. Zusätzlich wird in dieser Betriebsweise ein Auskondensieren von Feuchtigkeit aus der Abluft vermieden, da sie nicht durch angesaugte Frischluft abgekühlt wird, die nicht durch den Wärmetauscher 3 strömt. Auch das wirkt einem Vereisen entgegen.

Am Ende des Zuluftkanals, d. h. vor Zuluftgebläse 7 und Auslaß, z. B. Weitwurfdüse 12 befindet sich ein Ventil 11, mit dem der Luftstrom, welcher durch den Wärmetauscher 3 strömt, abgeschaltet werden kann.

Weiter kann die an der Austrittsfläche 5b angesaugte Zuluft durch eine Heizung 17 laufen, die nicht Bestandteil der Lüftungsvorrichtung ist, sondern bauseitig vorgesehen ist. Der Zuluftstrom tritt dann als Luftstrom 25 durch die Heizung 17 und tritt an dieser auch aus. Die Heizung 17 kann beispielsweise übliche Konvektoren aufweisen. Der Durchtritt durch die Heizung kann vorzugsweise abgeschalten werden.

Dadurch, daß die Heizung 17, wie im Vertikalschnitt der Figur 1 gut zu erkennen ist, bevorzugt unter der Lüftungsvorrichtung liegt, insbesondere unter der Konfiguration des liegenden T, kann sie einfach bauseitig vorbereitet werden und insbesondere an eine übliche Zentralheizung angeschlossen sein. Der Primärenergie-Wirkungsgrad der Heizung 17 ist damit deutlich besser, als bei üblichen elektrischen Heizregistern, die für einen Frostschutz vorgesehen sind.

Durch entsprechende Ansteuerung kann bevorzugt der Anteil der Zuluft, welcher durch die Heizung 17 läuft, beliebig eingestellt werden. Dies ermöglicht es, die Zuluft wunschgemäß zu erwärmen, ohne daß man auf eine hochpräzise Arbeitsweise der Heizung 17 selbst angewiesen wäre. Diese kann deshalb mit einer einfachen Thermostatsteuerung versehen werden, da über die Regelung der Luftmenge, welche die Heizung 17 durchströmt bzw. welche direkt an der Weitwurfdüse 12 unerwärmt auftritt, die von der Lüftungsvorrichtung der Zuluft zugeführte Wärme präzise eingestellt werden kann, ohne daß die Heizung 17 selbst aufwendig geregelt werden müßte.

Weiter in den Figuren 1 bis 5 dargestellt sind Leitbleche 19 und 20 zum Abdecken der Öffnungen für Frischluft bzw. Fortluft.

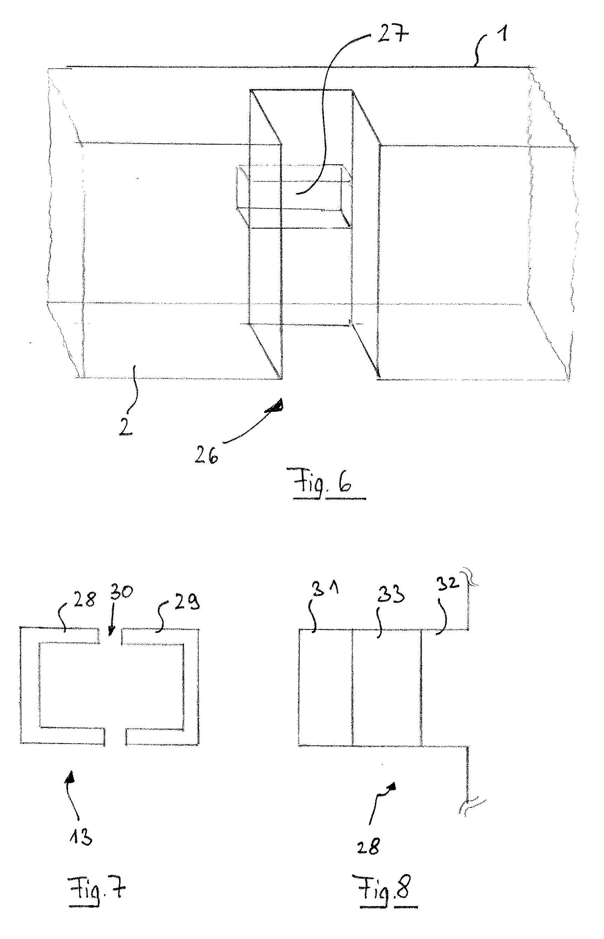

Um die Lüftungsvorrichtung besonders einfach bauseitig installieren zu können, ist ein Mauerkasten 14 vorgesehen, der schematisch lediglich in Figur 1 dargestellt ist. Dieser Mauerkasten ist passend zum Gehäuse 13 ausgebildet, das bis auf die Heizung 17 alle Elemente der Lüftungsvorrichtung beinhaltet. Um die Lüftungsvorrichtung einfach installieren zu können, wird bauseitig zuerst der Mauerkasten 14 eingebaut. Dazu kann beispielsweise, wie in Figur 6 in einer Schemazeichnung dargestellt ist, eine Auskofferung 26 in der Außenwand vorgesehen werden, die beispielsweise vom Boden bis zur Decke des Raumes durchläuft. An passender Stelle in der Auskofferung 26 ist ein Durchbruch 27, der in Art eines Fensters ausgeführt ist, zum Gebäudeäußeren geschaffen. Vorteilhafterweise sind an der Oberseite der Auskofferung 26 geeignete Elektroanschlüsse vorgesehen, welche die für den Betrieb der Lüftungsvorrichtung erforderliche elektrische Leistung bereitstellen. Bodenseitig ist an der Auskofferung 26 die Heizung 17 bereits bauseitig vorgesehen (nicht eingezeichnet).

Zum Vorbereiten des Einbaus der Lüftungsvorrichtung wird dann der Mauerkasten 14 in die Auskofferung 26 so eingebaut, daß sein dem Fuß des liegenden T entsprechender Teil in den Durchbruch 27 eingesetzt ist. Der Mauerkasten 14 wird nun gebäudeseitig fixiert. Anschließend werden die Elektroanschlüsse an den Mauerkasten 14 angeschlossen. Gleiches gilt hinsichtlich der Heizung 17, die an der Unterseite des Mauerkastens fluidisch angeschlossen wird. Nun ist alles zum Einbau des Gehäuses 13 vorbereitet, und die Installation der Lüftungsvorrichtung kann einfach dadurch abgeschlossen werden, daß das Gehäuse 13 in den Mauerkasten 14 eingeschoben wird.

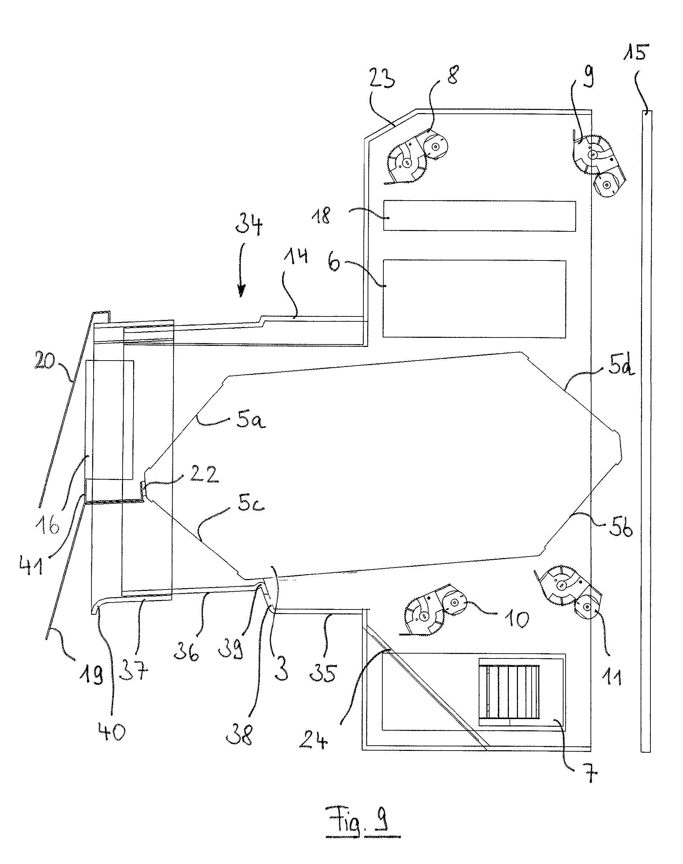

Der Mauerkasten 14 und das Gehäuse 13 sind so aufeinander abgestimmt, daß mit dem Einschieben des Gehäuses 13 alle erforderlichen Anschlüsse zwischen Mauerkasten 14, der gebäudeseitig bereits angeschlossen ist und Gehäuse 13 geschlossen werden. Dies betrifft insbesondere eine Dichtung 22 (siehe Figur 9) zwischen dem Austritt 5c für die Fortluft und dem Eintritt 5a für die Frischluft. Es wäre für den Wirkungsgrad der Lüftungsvorrichtung äußerst nachteilig, wenn diese Luftströme sich vermischen würden und beispielsweise Fortluft als Frischluft wieder angebaut würde.

Damit die Anschlüsse, die in der beschriebenen Ausführungsform an der Oberseite des Mauerkastens 14 bereitgestellt werden, problemlos geschlossen werden können, ist eine Schrägfläche 23 an der Oberseite des Gehäuses 13 vorgesehen, in der die entsprechenden Kupplungen liegen. Dadurch kann erreicht werden, daß beim einfachen Einschieben des Gehäuses 13 in den Mauerkasten 14 die fluidischen Anschlüsse, die zwischen Gebäude und Mauerkasten 14 hergestellt wurden, automatisch zum Gehäuse 13 und damit zu den Elementen der Lüftungsvorrichtung durchgeschaltet werden.

Es ist aber durchaus auch möglich, daß der Mauerkasten 14 Anschlüsse an seiner Außenseite aufweist, die zu einem Anschluß quer zur Einschubrichtung vorbereitet sind, und dann seinerseits Steckkontakte zum Anschließen des Gehäuses 13 bereitstellt, die längs der Einschubrichtung, also quer zur Anschlußrichtung an der Außenseite des Mauerkastens 14 angeordnet sind. Dies ist technisch besonders einfach zu realisieren. Sie liegen an der Unterseite des Querbalkens der T-förmigen Konfiguration des Gehäuses 13.

Die fluidischen Verbindungen zum Nebenraum und damit zum Ventil 8 erfolgen über die Schrägfläche 23. Ebenfalls eine Schrägfläche, nämlich die mit dem Bezugszeichen 24 versehene Schrägfläche, ist zum Herstellen der fluidischen Verbindung zwischen Heizung 17 und Zuluftkanal der Lüftungsvorrichtung vorgesehen. Der Luftkanal zur Heizung 17 ist an den Mauerkasten 14 angeschlossen, der eine entsprechende Gegenschrägfläche oder -anschlußleitung vorsieht. In der Schrägfläche 24 des Gehäuses 13 und/oder in der Gegenschrägfläche des Mauerkastens 14 liegen Dichtelemente, die den Luftkanal zur Heizung 17 abdichtend verbinden, wenn das Gehäuse 13 in den Mauerkasten 14 eingeschoben ist.

Eine Schrägfläche hat den besonderen Vorteil, daß keine fluidischen Dichtungen verwendet werden müßten, die einen Fluidstrom abdichten, der quer zu einer Einschubrichtung verläuft. Solche Dichtungen, die quer zu einer Einschubrichtung verlaufen, sind problematisch, da bei ihnen Dichtlippen über eine größere Strecke quer zu ihrer Dichtrichtung gegeneinander bewegt werden, was zu einem hohen Verschleiß und oftmals zu Dichtungsversagen führt. Die Schrägfläche erreicht, daß die Dichtflächen erst beim Abschluß des Einschiebevorgangs aufeinander zu liegen kommen und vorher während des Einschiebens nur vernachlässigbar, jedenfalls nicht in die Dichtung belastendem Maße, von anderen Flächen oder Elementen überfahren werden.

Die Einschubtiefe in den Mauerkasten wird durch einen Anschlag 42 begrenzt (vgl. Figur 1), welcher z. B. Bestandteil einer Ablaufschräge 26 für das Kondensat ist. Dieser Anschlag 42 begrenzt die Einschubtiefe des Gehäuses 13 in den Mauerkasten 14.

Für das Zusammenwirken von Mauerkasten 14 und Gehäuse 13 erreichen die Schrägflächen 23, 24, daß solche Verbindungen erst zum Abschluß des Einschiebevorgangs hergestellt werden, die eigentlich senkrecht zur Einschubrichtung nach unten oder oben laufen. Elektrische Anschlüsse, die in Figur 1 exemplarisch mit einem Anschlußelement 21 eingezeichnet sind, sind Beispiele für solche Anschlüsse. Sie können aber, anders als fluidische Anschlüsse, prinzipiell natürlich auch von der Rückseite, d. h. aus Richtung der Außenwandfläche 1 zwischen Mauerkasten 14 und Gehäuse 13 die Verbindung herstellen, wenn das Gehäuse 13 in den Mauerkasten 14 eingeschoben wird.

Wie in den Zeichnungen zu sehen ist, ragt die eingebaute Lüftungsvorrichtung im eingebauten Zustand mit ihrer Verkleidungsplatte 15 ein bestimmtes, aber sehr geringes Maß über die Innenwandfläche 2 vor. Dies ist erforderlich, um die Raumluft aus dem Innenraum ansaugen oder Zuluft abgeben zu können. Die Verkleidungsplatte 15 kann mit einem vom Bauherrn gewünschten Dekor gestaltet werden, beispielsweise mit normaler Wandfarbe. Die Verkleidungsplatte 15 vergrößert zudem die Bautiefe, welche für den Wärmetauscher 15 verfügbar ist. Auch verdeckt sie zumindest die Einströmöffnungen.

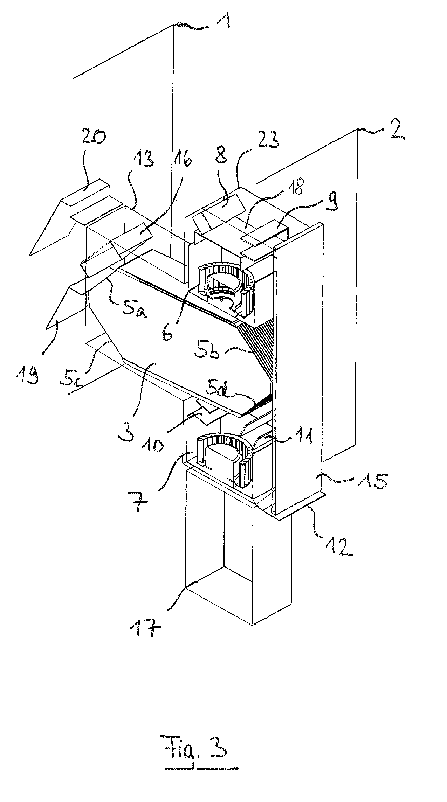

Das Gehäuse 13 ist schematisch in Figur 7 in einer Schnittdarstellung gezeigt. Es ist beispielsweise aus EPP herstellt und umfaßt einen Gehäuseboden 29 sowie einen Gehäusedeckel 28. Die Begriffe Deckel und Boden sind dabei auf den Zusammenbau der Lüftungsvorrichtung bezogen. Beispielsweise kann der Gehäuseboden 29 der Teil des Gehäuses 13 sein, der im perspektivischen Schnitt der Figur 3 zu sehen ist. Gehäuseboden und Gehäusedeckel sind an einer Fügestelle 30 formschlüssig verbunden, wie dies dem Fachmann bekannt ist. In der Schemazeichnung der Figur 7 ist dieser Formschluß nicht eingezeichnet. Figur 8 zeigt eine Draufsicht auf den Deckel 28.

Die Gehäuseteile haben naturgemäß eine gewisse Wanddicke, die für die Stabilität des Gehäuses erforderlich ist. Diese Wanddicke wird nun ausgenutzt, um den Überstromkanal zu realisieren. Dazu ist beispielsweise der Gehäusedeckel 28 seinerseits mehrteilig aufgebaut. Er weist ein erstes Deckelteil 31 sowie ein zweites Deckelteil 32 auf. Die Verbindung zwischen diesen Deckelteilen wird durch ein Blech 33 realisiert. Aufgrund der geringeren Wandstärke des Bleches 33 und dessen räumlicher Ausdehnung entsteht hinter dem Blech 33 ein Spalt zwischen der Innenseite des Bleches 33 und dem innen liegenden Wärmetauscher 3. Dieser Spalt realisiert den Überstromkanal. Zugleich bleibt die Außenfläche des Gehäuses 13 an dieser Wandstelle unverändert, hat also keine Ausbuchtung o. ä., und die Wanddicke des Gehäusebodens 29 sowie des Gehäusedeckels 28 muß auch nicht unnötig größer gestaltet werden, um Platz für den Überstromkanal im Gehäusedeckel oder Gehäuseboden zu schaffen.

Die Verwendung des Bleches 33 und die mehrteilige Bauweise des Gehäusedeckels 28 hat zugleich noch den Vorteil, daß der Formschluß zwischen Gehäusedeckel 28 und Gehäuseboden 29 einfach hergestellt werden kann. Beispielsweise können entsprechende Verrastvorrichtungen vorgesehen werden, die ein Einschieben oder Einschwenken des Gehäusedeckels 28 auf den Gehäuseboden 29 erfordern. Die zwei Deckelteile 31 und 32 können dann bequem einzeln mit dem Gehäuseboden verrastet werden und das Blech 33 sichert die Deckelteile 31, 32 in der verrasteten Stellung. Das Blech 33 muß dann lediglich gesichert werden, z. B. mit einer Verschraubung, und hält zugleich die Deckelteile 31 und 32 in der verrasteten Stellung am Gehäuseboden 29. Das Blech 33 hat also in dieser Hinsicht eine Doppelfunktion; es realisiert zum einen den Überstromkanal und erlaubt zum anderen eine einfache Verbindung von Gehäusedeckel und Gehäuseboden.

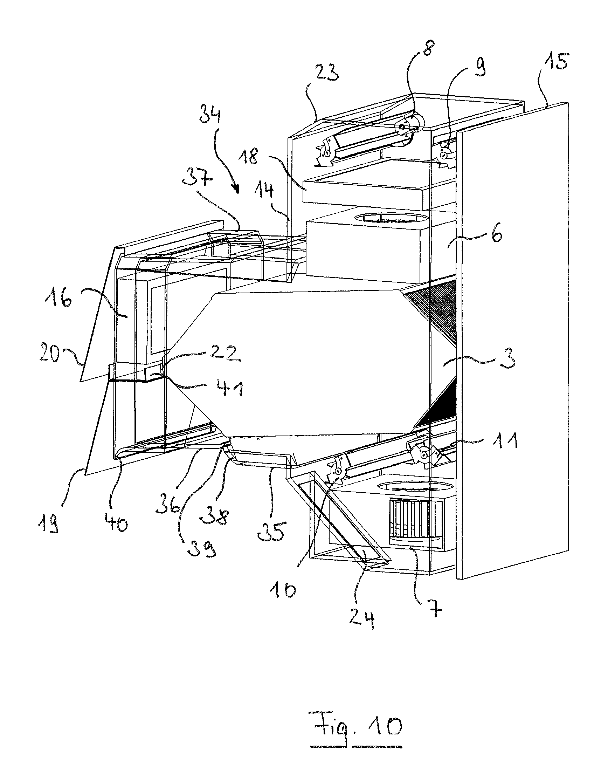

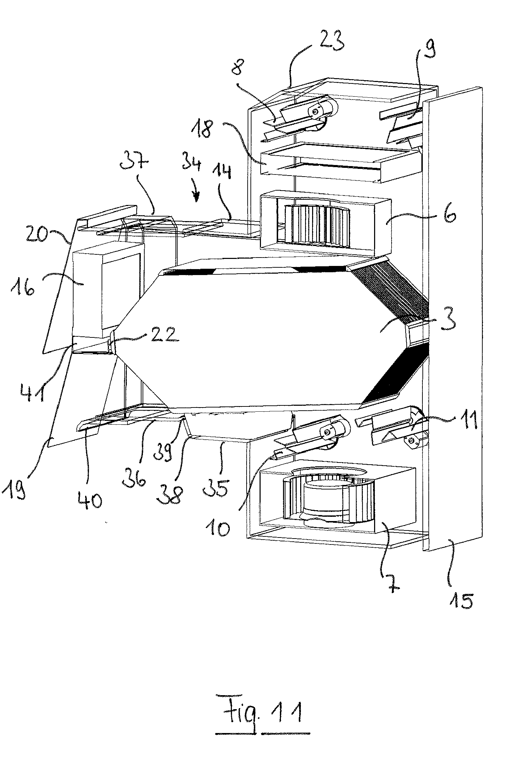

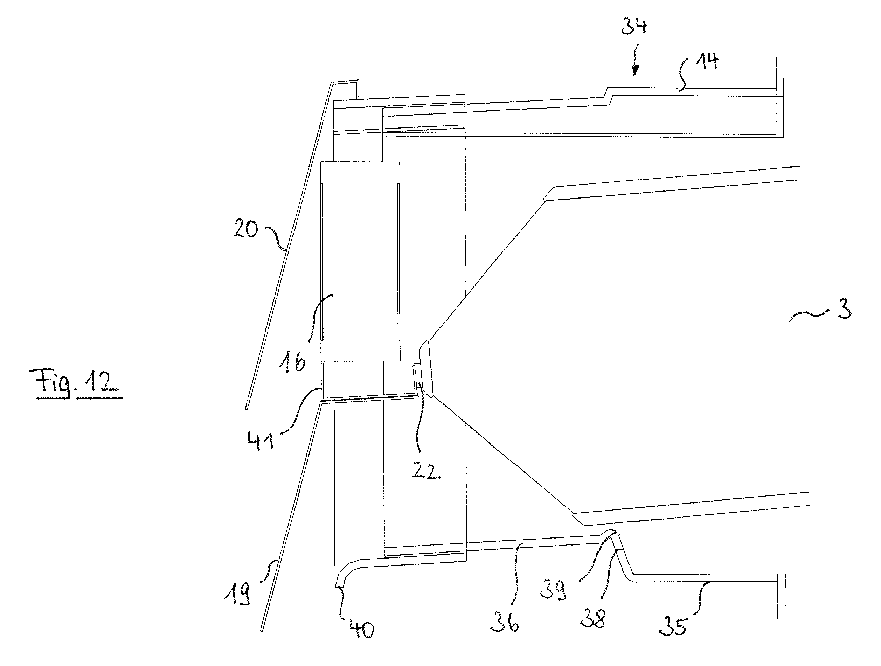

Die Figuren 9 bis 12 zeigen eine weitere Ausführungsform des Lüftungsgerätes, das bis auf wenige Details dem Lüftungsgerät der Figuren 1 bis 8 entspricht. Elemente und Bauteile, die funktionell oder strukturell dem des Lüftungsgerätes der Figuren 1 bis 8 entsprechen, sind mit denselben Bezugszeichen versehen. Ihre Beschreibung wird nicht noch einmal wiederholt. Kennzeichnend für das Lüftungsgerät der zweiten Ausführungsform ist es, daß das T-förmige Gehäuse und der entsprechende Mauerkasten 14 an seinen Fuß 34 (dieser Begriff ist auf die T-Form bezogen), also demjenigen Teil, das durch den Wanddurchbruch gesetzt wird, zwei Abschnitte aufweist. An einem geraden Abschnitt 35, der in der späteren Einbaulage horizontal liegt, schließt sich ein Endabschnitt 36 an, der leicht schräg, beispielsweise um 3° geneigt, zum Ende, d. h. in Richtung der Außenwand 1 (die in Figur 9 nicht eingezeichnet ist) abfällt. Durch diesen Abfall ist eine Schrägfläche geschaffen, aus der das Kondenswasser, welches an der Austrittsfläche 5c für die Fortluft herausläuft, aus der Lüftungsvorrichtung auslaufen kann.

Um die Lüftungsvorrichtung an unterschiedlich dicke Außenwände adaptieren zu können, ist für den Mauerkasten ein Abschlußrahmen 37 vorgesehen, der teleskopartig über den Endabschnitt 36 aufgeschoben werden kann. Der Endabschnitt 36 hat deshalb einen konstanten Querschnitt, wodurch der Abschlußrahmen 37 so weit eingeschoben werden kann, wie es die Dicke der Außenwand erfordert. Durch unterschiedlich tiefes Aufschieben des Abschlußrahmens 37 kann also der Mauerkasten 14, zu dem der Abschlußrahmen 37 gehört, auf die Dicke der Außenwand, d. h. den Abstand zwischen der Außenwandfläche und der Innenwandfläche eingestellt werden.

An der Unterkante des Abschlußrahmens 37 ist eine Tropfkante 40 vorgesehen, an der das Kondensat abtropfen kann.

Der Übergang zwischen dem geraden Abschnitt 35 und dem schräg verlaufenden Endabschnitt 36 des Fußes 34 ist zugleich als Anschlag 38 ausgebildet, der die Einschubtiefe des Gehäuses 13 in den Mauerkasten 14 festlegt. Im Bereich des Übergangs ist weiter eine Rippe 39 gebildet, die verhindert, daß aus dem Wärmetauscher 3 ausgetretenes Kondensat unerwünschterweise nicht zur Außenwandfläche, sondern zur Innenwandfläche hin läuft.

Die bereits erwähnte Dichtung 22, an welcher die Trennung angebracht ist, welche die an der Austrittsöffnung 5c ausgeblasene Fortluft von der an der Eintrittsfläche 5a angesaugten Frischluft trennt, ist an einem Träger 41 angebracht, der in der beschriebenen Ausführungsform U-förmig ist. Der Träger 41 ist am Mauerkasten 14 angebracht. Der Träger 41 mit der Dichtung 22 muß damit nicht weiter hinsichtlich seiner Lage eingestellt werden und sitzt nach dem Aufsetzen des Abschlußrahmens 37 über den Endabschnitt 36 automatisch in der richtigen Lage, so daß bei einem späteren Herausziehen und/oder Einschieben des Gehäuses die entsprechende Gegenfläche des Wärmetauschers 3 immer mit der Dichtung 22 zur passenden Dichtwirkung kommt.

Um einen Wechsel des Luftfilters 16 möglichst einfach zu gestalten, ist dieser am Gehäuse 13 (und nicht am Abschlußrahmen 37) angebracht. Dadurch ist der Luftfilter 16 einfach zugänglich, wenn das Gehäuse 13 aus dem Mauerkasten 14 gezogen wurde. Andernfalls wäre der Luftfilter 16 nur umständlich von der Gebäudeaußenseite zugänglich, was je nach Stockwerk, in dem das mit der Lüftungsvorrichtung versehene Gebäude liegt, sehr aufwendig wäre und Gerüste etc. erforderlich machen würde. Dieser Vorteil ergibt sich natürlich auch für die Bauweise der Fig. 1.

In der Ausführungsform der Figuren 9 bis 12 ist weiter das Gehäuse nicht mit einem mehrteiligen Deckel, wie in Figur 8 dargestellt, versehen. Vielmehr ist der Deckel einteilig und führt den Überstromkanal innerhalb des thermisch isolierenden Gehäuses 13. Dadurch ist der Wärmetauscher 3 von der im Überstromkanal geführten Frischluft thermisch abgekoppelt, was insbesondere für Regionen mit sehr niedrigen Außentemperaturen vorteilhaft sein kann.

Zur Steuerung der in den Figuren 1 bis 12 gezeigten Lüftungsvorrichtungen werden vorzugsweise die Temperaturen zum und vom Wärmetauscher 3, die relative Feuchte der Abluft und der Frischluft und der Kohlendioxidgehalt der Abluft gemessen. Die entsprechenden Sensoren liegen dabei im gefilterten Strömungsbereich, z. B. stromab der Luftfilter 16 und 18.

Die vorliegende Erfindung wurde anhand zweier konkreter Ausführungsbeispiele erläutert. Selbstverständlich können einzelne der beschriebenen Merkmale für sich in Alleinstellung oder in beliebiger Kombination mit anderen Merkmalen erfindungswesentlich sein. Auch können Merkmale der beiden Ausführungsbeispiele beliebig kombiniert oder weggelassen werden. Von besonderer Relevanz für die Erfindung und insbesondere jeweils für sich erfindungswesentlich können insbesondere folgende Merkmale sein:
- Verwendung eines Gegenstromwärmetauschers, vorzugsweise mit einem Wirkungsgrad von ≥ 80 % in einer derartigen Einbaulage, daß der Temperaturgradient im Wärmetauscher parallel zum Temperaturgradient der Außenwand, in der die Einheit eingebaut ist, verläuft.
- Verwendung eines zweistufigen Einbaukonzeptes, bei dem bauseitig zuerst ein Mauerkasten vorgesehen wird, der an die Gebäudeelektrik und -heizung angeschlossen wird und in den dann die spätere Einheit einfach eingeschoben wird. Entsprechend ausgestaltete fluidische Kupplungen und elektrische Stecker, die sich beim Einschieben automatisch schließen, sind hierfür wesentlich.
- Um einen hochwirksamen Gegenstromwärmetauscher verwenden zu können, sind die luftfördernden Motoren über/unter bzw. links/rechts einer waagerechten Ebene durch den Temperaturgradienten angeordnet.
- In einem besonderen Betriebsmodus kann eine Überströmung, d. h. ein Bypaß an der Außenwand des Gegenstromwärmetauschers realisiert werden, um ein Einfrieren des Gegenstromwärmetauschers zu verhindern oder diesen aufzutauen.
- Ein modulares Konzept erlaubt es, unter bzw. neben der Einheit eine Heizungseinrichtung vorzusehen, die an die normale Gebäudeheizung angeschlossen werden kann und bei Bedarf U-förmig durchströmt wird. Herkömmliche Heizregister am Einlaß sind dabei nicht erforderlich.

Die Lüftungsvorrichtung kann mehrere Räume versorgen, wobei vorzugsweise der Abzug der Abluft individuell für die Räume eingestellt werden kann.

Die Lüftungsvorrichtung realisiert eine äußerst kompakte Konstruktion, die in einer Gebäudeaußenwand vollständig eingebaut werden kann. Wärmebrücken durch Außenluftleitungen sind so weit wie möglich vermieden. Vorzugsweise findet weiter eine CO₂-, Temperatur- und/oder Feuchtemessung statt. Darüber hinaus ist in der Lüftungsvorrichtung innerhalb des Gehäuses 13 vorzugsweise ein Steuergerät eingebaut, das die Steuerung der entsprechenden Elemente der Lüftungsvorrichtung bewirkt, beispielsweise mittels einer Fuzzy-Regelung.

Zudem ist die Steuerung der Ventile so ausgebildet, daß die Ventile im Falle eines Stromausfalls oder Brandes geschlossen sind bzw. selbsttätig durch einen oder mehrere Energiespeicher (z. B. Federn, elektrische Speicher etc.) schließen. Vorzugsweise ist ein Anschluß an eine Brandschutzanlage oder ein temperaturgesteuerter Brandschutzbetrieb (z. B. Schließen der Ventile oberhalb einer bestimmten Abluft- oder Frischlufttemperatur) vorgesehen.

## Patentansprüche

1. Wärmerückgewinnende Lüftungsvorrichtung zum Einbau in eine thermische Gebäudehülle (1, 2), die einen Innenraum von einem Gebäudeäußeren trennt und die einen Temperaturgradienten zwischen Innenraum und Gebäudeäußerem bewirkt, wobei die Lüftungsvorrichtung aufweist:
- einen rekuperativen Wärmetauscher (3), der Wärmeenergie eines Abluftstromes auf einen Zuluftstrom überträgt und der als Gegenstromwärmetauscher ausgebildet ist, durch den der Zuluftstrom und der Abluftstrom strömen und in dem sie sich längs eines Temperaturgradienten abkühlen bzw. erwärmen, wobei der Temperaturgradient des Wärmetauschers (3) im wesentlichen parallel zum Temperaturgradienten der Gebäudehülle (1, 2) verläuft,
- eine Abluftfördereinrichtung (6), welche den Abluftstrom vom Innenraum durch den Wärmetauscher (3) zum Gebäudeäußeren fördert, und
- eine Zuluftfördereinrichtung (7), welche den Zuluftstrom vom Gebäudeäußeren durch den Wärmetauscher (3) zum Innenraum fördert,
**dadurch gekennzeichnet, daß**
- die Abluftfördereinrichtung (6) oberhalb und die Zuluftfördereinrichtung (7) unterhalb des Wärmetauschers (3) angeordnet sind, wobei
- die Lüftungsvorrichtung bezüglich des Wärmetauschers (3) und der Abluft- und Zuluftfördereinrichtungen (6, 7) in einem Vertikalschnitt die Konfiguration eines liegenden T hat, dessen Fuß senkrecht zur Gebäudehülle verläuft und durch den Wärmetauscher (3) gebildet ist, wobei die oberhalb und unterhalb des Wärmetauschers (3) liegenden Luftfördereinrichtungen (6, 7) den Querstrich des T bilden.

2. Lüftungsvorrichtung nach Anspruch 1, **dadurch gekennzeichnet, daß** der Wärmetauscher (3) ein zum Innenraum hin liegendes Ende hat und daß die Zuluft- und Abluftfördereinrichtungen (6, 7) gegenüber diesem Ende zum Gebäudeäußeren hin versetzt sind und senkrecht zum Temperaturgradienten gesehen Ein- bzw. Austrittsflächen (5d, 5b) des Wärmetauschers (3) höchstens teilweise überdecken.

3. Lüftungsvorrichtung nach einem der obigen Ansprüche, **dadurch gekennzeichnet, daß** der Zuluftstrom zwischen der Zuluftfördereinrichtung (6) und einer Austrittsfläche (5b) des Wärmetauschers (3) und der Abluftstrom zwischen der Abluftfördereinrichtung (7) und einer Austrittsfläche (5b) des Wärmetauschers (3) jeweils mindestens um 90° bezogen auf die Richtung des Temperaturgradienten umgelenkt sind.

4. Lüftungsvorrichtung nach einem der obigen Ansprüche, **dadurch gekennzeichnet, daß** ein verschließbarer Überströmkanal vorgesehen ist, durch den in dessen geöffneter Stellung der Zuluftstrom den Wärmetauschers (3) umströmt, um Eisbildung im Wärmetauscher zu vermeiden, wobei der Überströmkanal vorzugsweise von einer Oberseite des Wärmetauschers (3) zu einer Unterseite des Wärmetauschers (3) verläuft.

5. Lüftungsvorrichtung nach einem der obigen Ansprüche, **dadurch gekennzeichnet, daß** sie ein Gehäuse (13) aufweist, in dem Wärmetauscher (3), Abluftfördereinrichtung (6) und Zuluftfördereinrichtung (7) eingebaut sind, und daß weiter ein Mauerkasten (14) vorgesehen ist, der zum Einbau in die thermische Gebäudehülle (1, 2) vorgesehen ist, wobei das Gehäuse (13) und Mauerkasten (14) so aufeinander abgestimmt sind, daß das Gehäuse (13) in den Mauerkasten dichtend einschiebbar ist und wobei am Mauerkasten (14) und am Gehäuse (13) zueinander passende Elektro- und/oder Fluidkupplungen (21) vorgesehen ist/sind, die beim Einschieben des Gehäuses (13) in den Mauerkasten (14) für den Betrieb der Lüftungsvorrichtung erforderliche Elektro- und/oder Fluidverbindungen herstellt/herstellen.

6. Lüftungsvorrichtung nach Anspruch 5, **dadurch gekennzeichnet, daß** das Gehäuse (13) mindestens eine Schrägfläche (23, 24) aufweist, die schräg zur Einschubrichtung liegt und in der die Fluid- und/oder Elektrokupplungen liegt/liegen.

7. Lüftungsvorrichtung nach Anspruch 5 oder 6, **dadurch gekennzeichnet, daß** das Gehäuse (13) in einem Vertikalschnitt eine Gestalt eines liegenden T hat und daß der Mauerkasten (14) ein erstes Teil von T-förmiger Gestalt und ein zweites Teil (40) umfaßt, das teleskopierbar über den Fuß (34) des T schiebbar ist, um den Mauerkasten (14) an verschieden dicke thermische Gebäudehüllen (1, 2) anzupassen.

8. Lüftungsvorrichtung nach Anspruch 7, **dadurch gekennzeichnet, daß** der Fuß (34) einen Endabschnitt (36) aufweist, der gegenüber der Waagerechten leicht verkippt ist, wobei das zweite Teil (40) über den Endabschnitt (36) schiebbar ist.

9. Lüftungsvorrichtung nach Anspruch 8, **dadurch gekennzeichnet, daß** ein Ende des Endabschnitts (36) als Anschlag (38) ausgebildet ist, der das Einschieben des Gehäuses (13) in den Mauerkasten (14) begrenzt.

10. Lüftungsvorrichtung nach einem der obigen Ansprüche, **gekennzeichnet durch** eine zum Innenraum hin liegende Verkleidungsplatte (15) und eine Ausströmdüse (12) zu Abgabe des Zuluftstromes in den Innenraum, wobei die Ausströmdüse (12) zumindest teilweise von einem Rand der Verkleidungsplatte (15), oder einem daran anliegenden Luftleitelement gebildet ist oder in der Verkleidungsplatte (15) liegt.

11. Lüftungsvorrichtung nach einem der obigen Ansprüche, **dadurch gekennzeichnet, daß** unterhalb der Zuluftfördereinrichtung (7) ein Auslaß zur Abgabe des Zuluftstromes zu einer Heizeinrichtung (17) und vorzugsweise ein Einlaß zur Aufnahme des von der Heizeinrichtung (17) erwärmten Zuluftstromes vorgesehen sind.

12. Lüftungsvorrichtung nach einem der obigen Ansprüche, **dadurch gekennzeichnet, daß** der Wärmetauscher (3) eine parallel zum Temperaturgradienten des Wärmetauschers (3) und zum Fuß des T verlaufende Längsachse (A) hat, daß der Abluftstrom an einer oberhalb der Längsachse (A) liegenden Eintrittsfläche (5d) in den Wärmetauscher (3) eintritt und als Fortluftstrom an einer unterhalb der Längsachse (A) liegenden Austrittsfläche (5c) wieder aus dem Wärmetauscher (3) austritt und daß die Längsachse (A) leicht schräg zur Horizontalen liegt, bevorzugt in einem Winkel kleiner 10°, weiter bevorzugt kleiner 5°, besonders bevorzugt kleiner oder gleich 3°.

13. Lüftungsvorrichtung nach Anspruch 12, **dadurch gekennzeichnet, daß** in Stromrichtung des Abluftstromes der Abluftfördereinrichtung (6) zwei ansteuerbare Ventile (8, 9) vorgeordnet sind, von denen eines mit einem Luftanschluß für einen Nebenraum verbunden ist und das andere zum Innenraum führt, so daß das Steuergerät in der Betriebssteuerung einen variablen Abzug des Abluftstrom aus dem Innenraum und dem Nebenraum einstellt.

14. Lüftungsvorrichtung nach einem der obigen Ansprüche, **gekennzeichnet durch** eine zum Innenraum hin liegende Verkleidungsplatte (15), die gegenüber der Innenwandfläche (2) vorsteht und die Luftein- und/oder -auslässe überdeckt, so daß Ab- bzw. Zuluft hinter einem Rand der Verkleidungsplatte (15) ein- bzw. ausströmt.

15. Lüftungsvorrichtung nach einem der obigen Ansprüche, **dadurch gekennzeichnet, daß** die Zuluft- und die Abluftfördereinrichtung (6, 7) jeweils als Radialgebläse ausgebildet sind.
